# EUROPÄISCHE PATENTANMELDUNG

(11) **EP 1 022 502 A1**
(43) Veröffentlichungstag der Anmeldung: **26.07.2000**
(21) Anmeldenummer: 00200240.0
(22) Anmeldetag: 21.01.2000
(51) Int. Cl.: F16L 3/10, F16B 37/08, F16B 37/02

(54) **Mutter zur Schnellbefestigung und Rohrschelle mit einer derartigen Mutter**

(30) Priorität: 23.01.1999 DE 19903972
(71) Anmelder: J. van Walraven B.V., NL-3641 RK Mijdrecht (NL)
(72) Erfinder: Marky, Dirk, 10245 Berlin (DE); van Walraven, Jan, 3641 GP Mijdrecht (NL)
(74) Vertreter: Brookhuis, Hendrik Jan Arnold

(57) **Zusammenfassung**

Eine Federmutter umfaßt ein Grundteil, sowie mehrere von in einem Abstand zueinander liegenden Stellen des Grundteils ausgehenden federnden Laschen mit einander zugewandten Enden, zwischen denen eine Durchgangslochung für ein mit einem Außengewinde oder einem anderen äußeren Profil versehene männliches Befestigungselement begrenzt ist. Die federnden Laschen sind an ihren einander zugewandten Enden jeweils mit einem Profil versehen. Das männliche Befestigungselement ist in einer Befestigungsrichtung durch die Durchgangbohrung der Federmutter bei einer Spreizbewegung der federnden laschen verschiebbar. Eine Verschiebung in eintgegengesetzter Richtung zu der Bewegungsrichtung ist von einem Eingreifen der Profile der federnden Laschen und des männlichen Befestigungselements blockiert.

Die Federmutter ist weiter bei zumindestens einer federnden Lasche in solcher Weise mit einer mechanisch angreifenden Betätigungslasche versehen, daß durch die Ausübung einer Kraft auf die Betätigungslasche, vorzugsweise von Hand, insbesondere mit einem Finger, die betreffende federnde Lasche eine Spreizbewegung ausführt.

## Beschreibung

Die vorliegende Erfindung bezieht sich auf eine Federmutter nach dem Oberbegriff des Anspruchs 1 für die schnelle Befestigung von Teilen mit Hilfe eines männlichen Befestigungselements. Weiter bezieht sich die Erfindung auf eine mit einer derartigen Federmutter versehene Rohrschelle.

Eine Federmutter nach dem Oberbegriff des Anspruchs 1, sowie eine mit einer derartigen Federmutter versehene Rohrschelle sind zum beispiel bekannt aus der EP 0 908 637, DE-GM 298 23 094, EP 0 602 456 und DE-GM 297 04 780.

In den obengenannten Schriften nach dem Stand der Technik ist beschrieben, daß es möglich ist, durch die Rohrschellen mit einer Federmutter, statt einer normalen Mutter zu versehen, die Rohrschellen leicht und schnell um die Rohre zu montieren. Insbesondere ist bei diesen bekannten Rohrschellen vorgesehen, daß der Schraubenbolzen, mit dem die freien Enden des Schellenkörpers miteinander verbunden werden, in Befestigungsrichtung in die Federmutter hineingedrückt, statt, wie bei einer normalen Mutter, gedreht wird. Wenn der Schraubenbolzen bereits in der Mutter vormontiert ist, so wird dieser Schraubenbolzen beim Schließen der Schelle weiter in die Federmutter hineingedrückt werden. Bei der Verschiebung des Schraubenbolzens in Befestigungsrichtung zu der Federmutter, spreizen sich die Laschen auf und gleiten die Laschen der Federmutter ratschenartig über das Außengewinde des Schraubenbolzens.

Die Federmutter sind weiter in solcher Weise ausgeführt, daß - wenn versucht wird, den Schraubenbolzen entgegegesetzt zu der Befestigungsrichtung, also in Löserichtung, zu verschieben - die Enden der Laschen der Federmutter in Richtung aufeinander neigen und sich dann kräftig in dem Profil des Schraubenbolzens festklemmen. Die Verbindung zwischen der Federmutter und dem Spannbolzen kann sich hierdurch nicht von selbst lösen, und nur durch ein Drehen kann der Schraubenbolzen von der Federmutter gelöst werden.

Bei der Montage einer derartigen Rohrschelle mit Federmutter um ein Rohr kann der Monteur den Schraubenbolzen von Hand in, oder weiter in die Federmutter hineindrücken. Wenn erforderlich kann der Schraubenbolzen dann danach noch ein Stück, zum Beispiel einige Umdrehungen, angezogen werden.

Bei manchen bekannten Rohrschellen mit Federmutter ist es oft nicht leicht, den Bolzen in die Federmutter zu drücken, namentlich, weil die Laschen der Federmutter viel Widerstand leisten. Hierdurch wird dann eigentlich wieder ein Werkzeug benötigt, um den Bolzen in die Federmutter hineinzudrücken, was unerwünscht ist. Bei anderen bekannten Rohrschellen mit Federmutter kann der Bolzen mit relativ wenig Kraft von Hand in die Federmutter hineingedrückt werden, aber bei diesen Schellen ist es nachteilig, daß der Schraubenbolzen anschließend nicht kräftig genug durch die Laschen der Federmutter festgeklemmt wird. Hierdurch besteht die Chance, daß der Bolzen sich unerwünscht löst.

Der vorliegenden Erfindung liegt die Aufgabe zugrunde, obengenannte Probleme durch das Schaffen einer verbesserten Federmutter zu lösen. Insbesondere liegt der Erfindung die Aufgabe zugrunde, eine Rohrschelle die mit einer mit einer derartigen verbesserten versehene Federmutter zu schaffen. Weiter liegt der Erfindung die Aufgabe zugrunde, eine Rohrschelle zu schaffen, die schnell und leicht um ein Rohr montiert werden kann.

Die Erfindung löst diese Aufgaben dadurch, daß eine Federmutter zur Schnellbefestigung von Teilen mit Hilfe eines männlichen Befestigungselements geschaffen wird, welche Federmutter ein Grundteil umfaßt, sowie mehrere von in einem Abstand zueinander liegenden Stellen des Grundteils ausgehenden federnden Laschen mit einander zugewandten Enden, zwischen denen eine Durchgangsbohrung für eine mit einem Außengewinde oder einem anderen äußeren Profil versehenen männlichen Befestigungselement begrenzt ist, welche federnden Laschen an ihren zueinander gewandten Enden jeweils mit einem Profil versehen sind, wobei das männliche Befestigungselement in einer Befestigungsrichtung durch die Durchgangsbohrung der Federmutter bei einer Spreizbewegung der einander zugewandten Enden der federnden Laschen verschiebbar ist, und wobei eine Verschiebung in entgegengesetzter Richtung zu der Befestigungsrichtung durch ein Eingreifen der Profile der federnden Laschen und des männlichen Befestigungselements blockiert ist. Die Federmutter ist dadurch gekennzeichnet, daß die Federmutter weiter bei zumindestens einer federnden Lasche mit einer mechanisch an diese angreifenden Betätigungslasche in solcher Weise versehen ist, daß durch ein Ausüben einer Kraft auf die Betätigungslasche, vorzugsweise mit der Hand, insbesondere mit einem Finger, die betreffende federnde Lasche eine Spreizbewegung ausführt.

Die erfindungsgemäße Federmutter kann für jeden Befestigungszweck angewendet werden.

Dadurch, daß eine Kraft auf die Betätigungslasche ausgeübt wird, wird das Aufspreizen der federnden Laschen gefördert. Hierdurch ist die Kraft, die erforderlich ist, um das männliche Befestigungselement in, oder weiter in die Durchgangsbohrung hineinzudrücken, beschränkt. Dies schafft zum Beispiel die Möglichkeit, die federnden Laschen relativ steif auszuführen, so daß sie sich einerseits schwierig aufspreizen, aber anderseits das männliche Befestigungselement wohl kräftig festklemmen. Die über eine Betätigungslasche ausgeübte Kraft unterstützt dann das Aufspreizen der federnden Laschen. Hierbei kann es noch immer so sein, daß die Profile des männlichen Befestigungselements und der federnden Laschen bei dem in der Befestigungsrichtung Verschieben des männlichen Befestigungselements zu der Federmutter ratschenartig übereinandergleiten. Andererseits ist es auch denkbar, daß durch eine Kraftausübung auf die federnden Laschen über die Betätigungslaschen, diese federnden Laschen sich so weit auseinanderbewegen, daß es zwischen den Profilen keinen Kontakt mehr gibt.

Die Betätigungslasche kann ein Einzelteil sein, das in geeigneter Weise an der Federmutter befestigt ist, so daß die Betätigungslasche mechanisch auf die zugehörige federnde Lasche angreift.

Vorzugsweise ist die Federmutter bei jeder federnden Lasche mit einer zugehörigen Betätigungslasche zur Förderung des Aufspreizens der federnden Laschen versehen.

In einer vorteilhaften Ausbildung erstreckt sich eine Betätigungslasche ab dem mit einem Profil versehenen Ende der federnden Lasche nach außen aus. Es ist aber auch denkbar, daß die Betätigungslasche an einer anderen Stelle als an dem von einem Profil versehenen Ende mechanisch an die zugehörige federnde Lasche angreift. In einer vorteilhaften Ausführung hat die Federmutter zwei einander gegenüberliegende Federlaschen, die zwischen ihnen die Durchgangsbohrung für das männliche Befestigungselement begrenzen.

In einer praktischen Ausführung liegt das Grundteil in einem Abstand zu der Durchgangsbohrung zwischen den federnden Laschen, und ist das Grundteil mit einer Durchgangsbohrung für den Schaft des männlichen Befestigungselements versehen, welche Bohrungen dann fluchten.

In einer praktischen Abwandlung umfaßt das Grundteil einen (metallenen) Plattenkörper mit einem an seinen sich gegenüberliegenden Seiten gekrümmten Steg, an welchen gekrümmten Steg eine federnde Lasche anschließt.

In einer möglichen Ausführung ist vorgesehen, daß eine federnde Lasche wie eine längliche Lasche ausgeführt ist, die biegeelastisch ist und/oder über eine elastisch gelenkige Verbindung mit dem Grundteil verbunden ist, so daß, wenn die Mutter in das männliche Befestigungselement hineingedrückt wird, sich die einander zugewandten Enden der federnden Laschen aufspreizen können.

In einer anderen möglichen Ausführung umfaßt jede federnde Lasche ein Verbindungsteil und ein Gelenkteil, wobei sich das Verbindungsteil zwischen dem Gelenkteil und dem mit einem Profil versehenen Ende der federnden Lasche erstreckt, und wobei das Gelenkteil an das Grundteil anschließt. Bei einem Aufspreizen der einander zugewandten Enden der federnden Laschen, wird dann die elastische Verformung größtenteils in dem Gelenkteil der federnden Lasche konzentriert sein.

Vorzugsweise sind die federnden Laschen an ihren einander zugewandten Enden jeweils mit einem sich in die Befestigungsrichtung erstreckenden Steg versehen, der an der der Durchgangsbohrung zugewandten Seite mit dem Profil versehen ist. Auf diese Weise kann zum Beispiel realisiert werden, daß der Steg an der der Durchgangsbohrung zugewandten Seite wie ein Bogensegment mit einem Innengewinde mit einem oder mehreren Gewindegängen ausgeführt ist.

In einer vorteilhaften Ausführung schließt die Betätigungslasche in einem Abstand zu der federnden Laschen an den sich in die Befestigungsrichtung entlang der Durchgangsbohrung für das männliche Befestigungselement erstreckenden Steg an. Vorzugsweise verläuft die Betätigungslasche dann ab diesem Steg in einem Abstand über der zugehörigen federnden Lasche nach außen.

Vorteilhafte Ausbildungen der erfindungsgemäßen Federmutter sind in den Ansprüchen und in der Beschreibung anhand der Zeichnung beschrieben.

Die Erfindung bezeiht sich weiter auf eine mit einer Federmutter versehene Rohrschelle.

Insbesondere ist bei der Erfindung eine Rohrschelle zum Befestigen eines Rohres oder dergleichen an einer Wand, einer Decke oder einer anderen Unterstützung vorgesehen, welche Schelle einen Schellenkörper zum Umschließen des Rohres umfaßt, welcher Schellenkörper eine von seinem ersten und zweiten freien Ende begrenzte Öffnung hat, um den Schellenkörper um das Rohr anzuordnen, und wobei der Schellenkörper ein Aufeinanderzubewegen der freien Enden gestattet, um die Schelle zu schließen, wobei eine Verbindungseinheit zum lösbaren Miteinanderverbinden der freien Enden vorgesehen ist, welche Verbindungseinheit eine wie oben erläuterte Federmutter und ein zugehöriges männliches Befestigungselement umfaßt.

In einer bevorzugten Ausbildung umfaßt die Federmutter zwei federnde Laschen mit jeweils einer zugehörigen Betätigungslasche, welche Betätigungslaschen sich an beiden Seiten der Durchgangsbohrung für das männliche Befestigungselement in solcher Weise erstrecken, daß das männliche Befestigungselement dadurch in die Federmutter hineingedrückt werden kann, daß ein Daumen an das männliche Befestigungselement und zwei Finger, vorzugsweise der Zeigefinger und der Mittelfinger dieser betreffenden Hand, jeweils in solcher Weise an eine Betätigungslasche gelegt werden, daß mit dem Daumen einerseits und mit den Fingern andererseits entgegengesetzte Kräfte ausgeübt werden können, und die federenden Laschen sich aufspreizen. Auf die federnden Laschen wirkt dann die über die Betätigungslaschen ausgeübte Kraft, und, wenn die federnden Laschen mit dem männliche Befestigungselement in Kontakt bleiben, auch die auf dieses Befestigungselement ausgeübte Kraft. Dieses Kräftespiel führt zu einer leichten Aufspreizung der federnden Laschen. Diese Lösung erleichtert es dem Monteur, mit nur einer Hand das männliche Befestigungselement in, oder - wenn das männliche Befestigungselement bereits in der Federmutter vormontiert war - weiter in die Federmutter hineinzudrücken.

In einer bevorzugten Ausbildung ist die Federmutter schwenkbar an dem ersten freien Ende des Schellenkörpers angeordnet, wobei das männliche Befestigungselement, vorzugsweise ein Schraubenbolzen, in solcher Weise in der Federmutter vormontiert worden ist, daß das männliche Befestigungselement noch weiter in die Federmutter hineingedrückt werden kann. Vorzugsweise ist dann der Schellenkörper an der Seite des zweiten freien Endes mit einem Auflager versehen, zum Beispiel einem nach außen gerichteten Flansch, den das männliche Befestigungsorgan hintergreifen kann.

In einer vorteilhaften Ausführung ist die Rohrschelle mit einer elastischen Einlage an der Innenseite des Schellenkörpers versehen, und liegt die schwenkbar an dem Schellenkörper befestigte Federmutter zum Schaffen einer elastischen Rückstellkraft für die Federmutter an der Einlage an. Hierbei ist es möglich, daß die Federmutter sich bis zwischen die elastische Einlage und den Schellenkörper erstreckt.

Die Federmutter kann in vielerlei unterschiedlichen Weisen ausgeführt und in einer Rohrschelle untergebracht sein.

Wie bekannt sind auf dem Gebiet von Rohrschellen unzählige unterschliedliche Ausführungen der Verbindungseinheit bekannt, die dazu dient, die freien Enden des Schellenkörpers zu verbinden, wobei eine Mutter in Verbindung mit einem männlichen Befestigungselement, üblicherweise einem Schraubenbolzen, angewendet wird. Dabei ist die Mutter meistens keine übliche Sechskantmutter, sondern oft ein aus einem oder mehreren Elementen zusammengestelltes Teil, das wegen seiner Funktion als Mutter angedeutet werden kann. Er wird deutlich sein, daß der Fachmann nach dem Lesen dieser Anmeldung imstande sein wird, bei jeder diesen bekannten Rohrschellen, die bekannte Mutter durch eine Federmutter nach dem hier beschriebenen Erfindungsgedanken zu ersetzen. Soweit in dem Rahmen dieser Anmeldung zur Erläuterung der Erfindung auf bekannte Rohrschellen hingewiesen wird, gilt dieser Hinweis keineswegs als Beschränkung, sondern nur als Veranschaulichung.

Die Erfindung wird nachfolgend anhand der Zeichnung näher erläutert werden. Es zeigt:
- Fig.1: in Seitenansicht, teilweise im Schnitt, ein erstes Ausführungsbeispiel der erfindungsgemäßen Federmutter mit einer Befestigungsschraube,
- Fig. 2: in Seitenansicht, teilweise im Schnitt, ein zweites Ausführungsbeispiel der erfindungsgemäßen Federmutter,
- Fig. 3: perspektivisch einen Teil einer mit einer Federmutter nach Fig. 2 versehene Rohrschelle,
- Fig. 4: in Seitenansicht im Schnitt eine erfindungsgemäße Rohrschelle mit Federmutter und Spannbolzen,
- Fig. 5: eine Ausschnittsvergrößerung der Figur 4,
- Fig. 6: eine Vorderansicht der Ausschnittsdarstellung der Fig. 5,
- Fig. 7a-d: jeweils in Vorderansicht, Seitenansicht, Rückansicht und Unteransicht die Federmutter der Rohrschelle nach den Figuren 4-6,
- Fig. 8: eine andere erfindungsgemäße Rohrschelle mit der Federmutter und dem Spannbolzen,
- Fig. 9: im Schnitt den mit der Federmutter und dem Spannbolzen versehenen Teil der Rohrschelle nach Fig. 8, und
- Fig. 10: in einer Darstellung gemäß Fig. 9 eine Abwandlung der Federmutter.

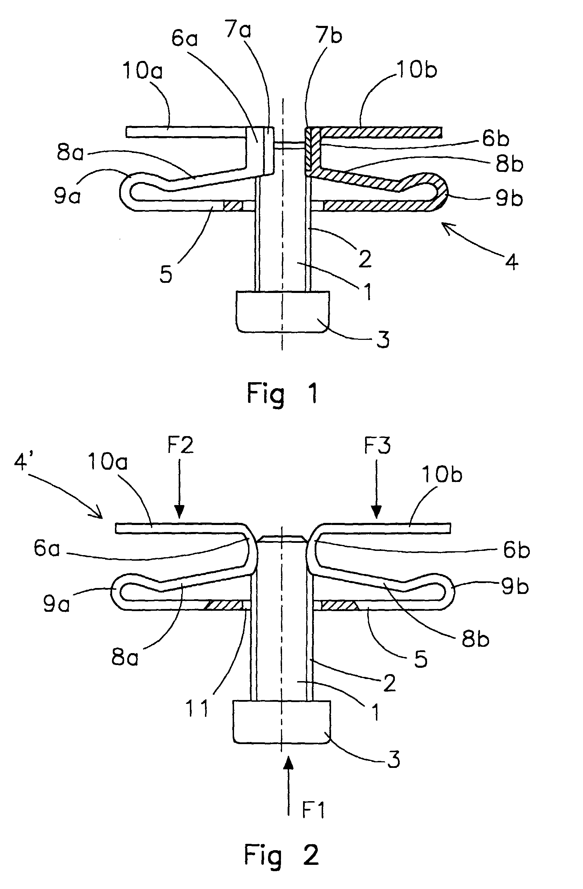

Figur 1 zeigt als Beispiel eines männliche Befestigungselements einen Schraubenbolzen 1 mit einem mit einem Außengewinde 2 versehenen Schaft und einem Bolzenkopf 3. Übrigens kann statt eines Schraubenbolzens zum Beispiel auch eine Schraube vorgesehen sein. Weiter braucht das Profil des männliche Befestigungselements keine Schraubenlinienform zu zeigen.

An dem Ende des Bolzens 1 befindet sich ein Ausführungsbeispiel der erfindungsgemäßen Federmutter 4.

Die Federmutter 4 hat ein Grundteil 5 und zwei sich ab einander gegenüberliegenden Enden des Grundteils 5 in Richtung aufeinander erstreckende Laschen. Die federnden Laschen umfassen jeweils ein Verbindungsteil 8a, 8b und ein federndes beweglich ausgeführtes Gelenkteil 9a, 9b, das an das Grundteil 5 angeschlossen ist. An den einander zugewandten Enden sind die federnden Laschen jeweils mit einem Muttersegment 6a, 6b versehen. Die beiden Muttersegmente 6a, 6b sind für die Bildung einer geteilten Gewindebohrung jeweils mit einem Innengewindeteil 7a, 7b versehen, das dem Außengewindeteil 2 des Bolzens 1 entspricht. Die einander gegenüberliegenden Innengewindeteile 7a, 7b umgreifen jeweils einen Teil des Außengewindes 2 und sind in Eingriff mit diesem.

Die Verbindungsteile 8a, 8b verlaufen jeweils parallel oder in einem spitzen Winkel zu dem Grundteil 5. Die Gelenkteile 9a, 9b sind gekrümmt ausgeführt und schließen bei einer Biegungslinie in einem Winkel an die mehr oder weniger gerade ausgeführten Verbindungsteile 8a, 8b an.

An dem von dem Grundteil 5 abgewandten Ende is an jedem Muttersegment 6a, 6b eine Betätigungslasche 10a, 10b angeordnet.

Die Betätigungslaschen 10a, 10b können zum Beispiel jeweils an dem zugehörigen Muttersegment 6a, 6b angeschweißt sein.

Die in Figur 2 gezeigte Mutter 4' unterscheidet sich nur dadurch von der Mutter 4 nach Figur 1, daß die Mutter der Figur 2 einteilig aus einem Streifen eines geeigneten Materials, vorzugsweise Metall, geformt ist. In dem Gebiet der Muttersegmente 6a, 6b wird eine Bohrung ausgeführt und anschließend wird ein Innengewinde, das dem Außengewinde des Bolzens entspricht, angeordnet.

Die Figuren 1 und 2 zeigen, daß in dem Grundteil 5 eine Durchgangsbohrung 1 für den Bolzen 1 vorhanden ist, die mit der Durchgangsbohrung zwischen den Muttersegmenten 6a, 6b fluchtet. Der Durchmesser der Bohrung 11 ist größer als der Durchmesser des Schaftes des Bolzens 1.

Die Wirkung der Verbindung mit den in den Figuren 1 und 2 gezeigten Federmuttern 4, 4' wird nachfolgend erläutert.

Die beiden mit der Federmutter 4, 4' und dem Bolzen 1 zu verbindenden Teile (nicht gezeigt), zum Beispiel die zu verbindenden freien Enden des Schellenkörpers einer Rohrschelle, befinden sich zum Beispiel zwischen der Innenfläche des Bolzenkopfes 3 und der freien Fläche des Grundteils 5 der Mutter. Um die beiden freien Enden der Rohrschelle (oder beliebige andere zu verbindende Maschinenteile) in Richtung aufeinander zu spannen, wird auf die Betätigungslaschen 10a, 10b der Mutter 4, 4' und/oder auf den Kopf des Bolzens 1 in Richtung auf die zugehörigen Pfeile F1, F2, F3 eine Kraft ausgeübt. Hierdurch führt der Bolzen 1 eine Verschiebung zu der Mutter 4, 4' aus, weil die beiden Muttersegmente 6a, 6b elastisch an dem Grundteil 5 befestigt sind, und bei Verlagerung des Bolzens 1 in Befestigungsrichtung aufgespreizt werden können. Durch die Kräfte F2, F3 auf den Betätigungslaschen 10a, 10b ist das Aufspreizen der Muttersegmente 6a, 6b leicht.

Es ist nicht möglich - nachdem die Federmutter 4, 4' auf die Schaft des Bolzens 1 geschoben ist - durch eine Schiebebewegung in entgegengesetzter Richtung, also in Löserichtung, den Bolzen 1 zu der Federmutter 4, 4' zu verschieben, da die beiden Innengewindeteile 7a, 7b dann fest in das Außengewinde 2 des Bolzens 1 hineingedrückt werden. Nur durch ein Drehen können die Federmutter 4, 4' und der Bolzen 1 gelöst werden.

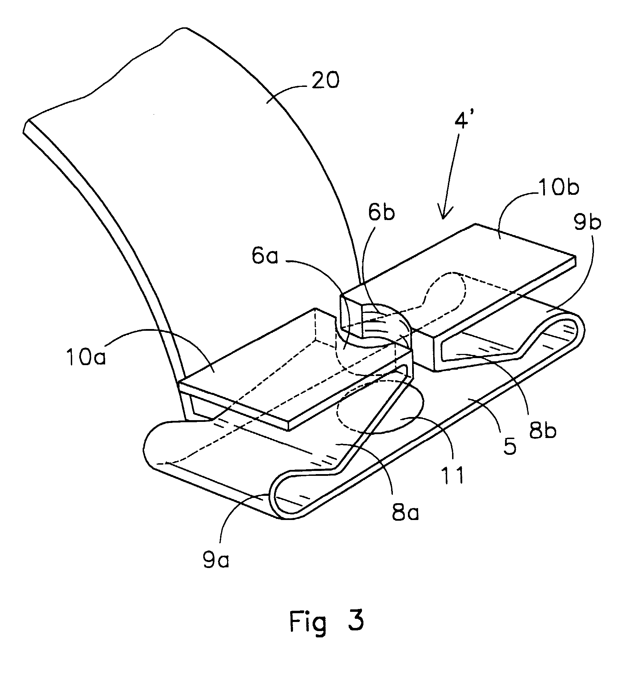

Figur 3 zeigt einen Teil einer erfindungsgemäßen Rohrschelle 20, welcher Teil mit der Mutter 4' nach Figur 2 versehen ist. Insbesondere ist in Figur 3 ein Teil eines ringförmigen Schellenkörpers zum Umschließen eines an einer Wand, Decke oder einer anderen Unterstützung zu befestigenden Rohres ersichtlich. In diesem Beispiel ist der Schellenkörper aus Metall hergestellt.

Die Mutter 4' kann als Einzelteil hergestellt sein und in geeigneter Weise an diesem Schellenkörper 20 festgesetzt sein. Zum Beispiel ist die Mutter 4' an dem Schellenkörper mittels einer (Punkt)Schweiß-, Preß-, Klemm-, oder Nietverbindung befestigt, oder der Grundteil der Mutter 4', oder aber des Schellenkörpers zum Beispiel mit Befestigungsvorsprüngen versehen, die in zugehörigen Aussparungen des anderen Teils gesichert werden können.

Die Federmutter 4' ist in Fig. 3 ein Teil einer Verbindungseinheit. mit der die bei einer Teilung in dem Schellenkörper liegenden freien Enden des Schellenkörpers zum Schließen der Schelle miteinander verbunden werden können.

Zum Beispiel kann in der Mutter 4' ein Schraubenbolzen vormontiert werden, welcher dann beim Schließen der Schelle in Eingriff mit dem anderen freien Ende des Schellenkörpers gebracht wird und anschließend weiter in die Federmutter 4' hineingedrückt wird, um die freien Enden in Richtung aufeinander zu spannen.

Zum Beispiel kann die Schelle der Bauart sein, die mit zwei Schellenhälften schwenkbar miteinander verbunden sind. Dabei kann die Federmutter an dem Schellenkörper festgesetzt sein. Eine derartige Anordnung der Mutter ist zum Beispiel aus der EP 0 760 445 bekannt, wo sogar zwei Federmuttern 4' vorgesehen sein können, oder zum Beispiel aus der DE 40 15 404, EP 0 389 309 und DE 40 26 636.

Als Alternative kann die Federmutter schwenkbar an dem Schellenkörper befestigt sein. Beispiele von Körperschellen mit schwenkbaren Muttern, die nach dem Erfindungsgedanken angepaßt werden können sind unter anderen ersichtlich in der DE 35 22 497, DE 33 46 423, DE 43 27 859, EP 0 188 649, EP 0 387 967, DE 197 16 632, DE-GM 94 03 136, EP 0 671 579, EP 0 512 654, DE 0 197 27 610 und DE 34 39 418.

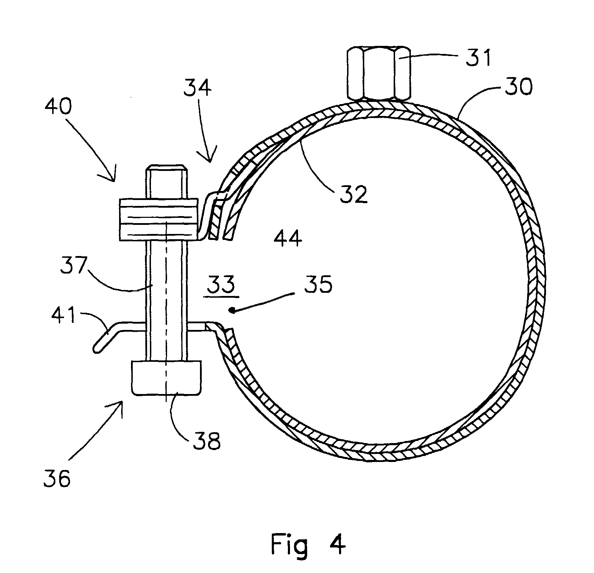

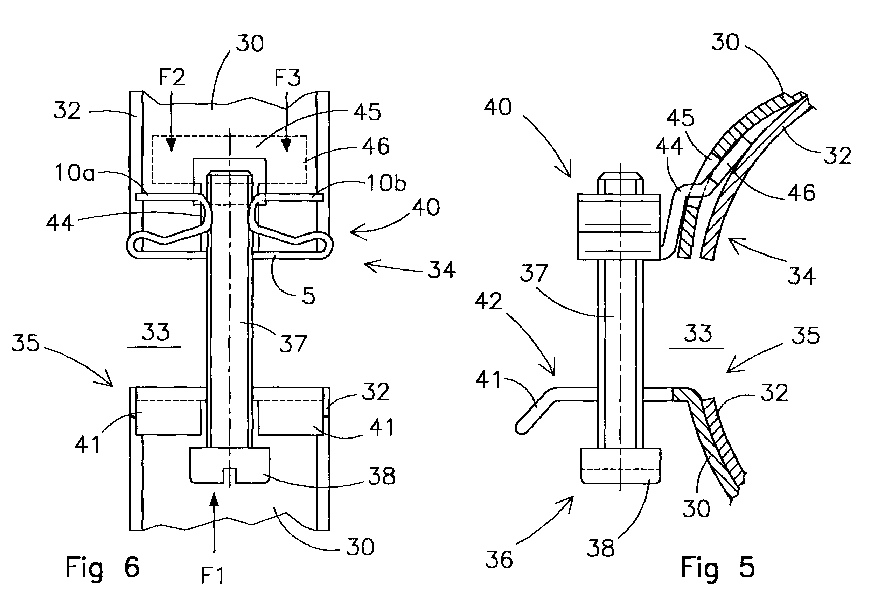

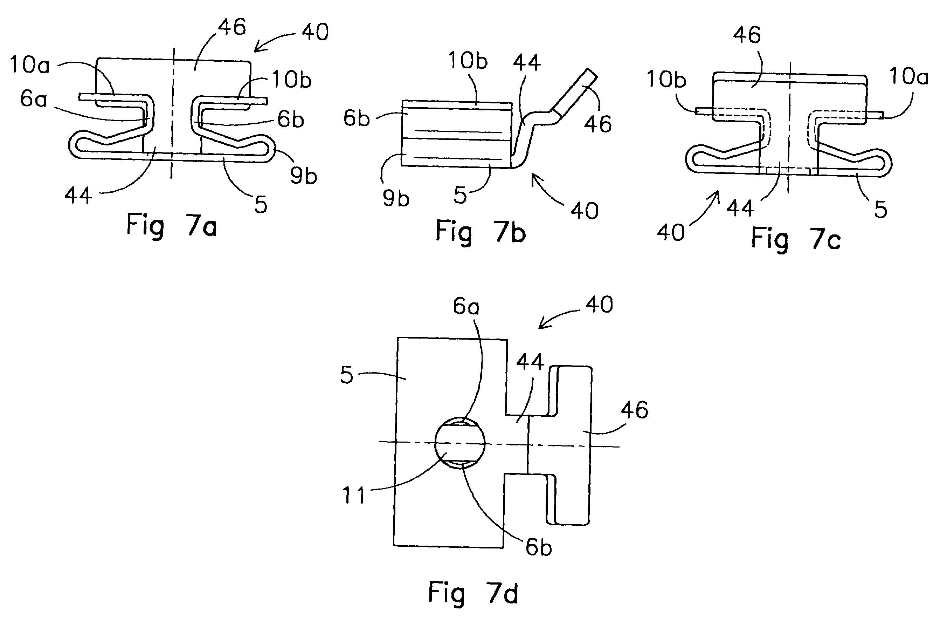

Anhand der Figuren 4-7 wird nun die Anwendung des Erfindungsgedankens auf die aus der DE 34 39 418 bekannte Rohrschelle erläutert werden.

In der Figur 4 ist ein ringförmiger Schellenkörper 30 ersichtlich, der hier aus Metall hergestellt ist. An dem Schellenkörper 30 ist eine Mutter 31 befestigt, um den Schellenkörper 30 an einer Unterstützung, zum Beispiel der Decke eines Gebäudes, befestigen zu können.

Der Schellenkörper 30 ist an der Innenseite mit einer elastischen Einlage 32 versehen, welche die Ränder des Schellenkörpers 30 umgreift.

Der Schellenkörper 30 hat eine Öffnung 33, so daß der Schellenkörper 30 um ein Rohr angeordnet werden kann. Die Öffnung 33 ist von einem ersten freien Ende 34 und einem zweiten freien Ende 35 des Schellenkörpers 30 begrenzt.

Zum Verbinden der freien Enden 34, 35 ist eine Verbindungseinheit vorgesehen.

Die Verbindungseinheit umfaßt einen Spannbolzen 36 mit einem von einem Außengewinde versehenen Schaft 37 und einen Bolzenkopf 38. Der Spannbolzen 36 ist in einer Mutter 40 vormontiert, die schwenkbar an dem ersten freien Ende 34 des Schellenkörpers befestigt ist.

An dem zweiten freien Ende 35 ist der Schellenkörper 30 mit einem nach außen gerichteten Flansch 41 mit einem Schlitz 42 versehen. Der Schlitz 42 ist so, daß der Schaft des Spannbolzens 36 in diesem Schlitz 42 schwenken kann, wobei der Bolzenkopf 38 den Flansch 41 hintergreift.

Die Mutter 40 entspricht in konstrueller Hinsicht zum größten Teil der Federmuttr nach den Figuren 2 und 3. Aus diesen Gründen sind entsprechende Teile mit den gleichen Bezugsziffern versehen. Das Grundteil 5 ist mit einem Arm 44 versehen, der sich durch eine Öffnung 45 in dem Schellenkörper 30 erstreckt und einen Teil 46 hat, der zwischen dem Schellenkörper 30 und der elastischen Einlage 32 liegt.

Wenn die Schelle nach Anordnung des Schellenkörpers 30 um ein Rohr geschlossen wird, so schwenkt der Spannbolzen 36 automatisch in den in den Figuren 4-6 gezeigten Stand, in dem der Bolzenkopf 38 die Schenkel des Flansches 41 hintergreift. Die Schelle ist dann provisorisch geschlossen.

Anschließend kann der Monteur den Spannbolzen 36 weiter mit der Hand in die Mutter 40 hineindrücken. Dabei kann der Monteur einen Daumen an den Bolzenkopf 38, und zwei Finger, vorzugweise den Zeigefinger und den Mittelfinger, dieser betreffenden Hand jeweils in solcher Weise an eine Betätigungslache 10a, 10b legen, daß mit dem Daumen einerseits und mit den Fingern andererseits entgegengesetzte Kräfte F1, F2, F3 ausgeübt werden. Durch diese Kraftausübung spreizen sich die mit einem Innengewinde versehenen Teile der Mutter 40 auf und kann der Bolzen 36 mit wenig Kraft in die Mutter 40 hineingedrückt werden. Hierbei ist es möglich, daß das Gewinde des Bolzens 36 ratschenartig entlang dem Gewinde der Mutter 40 gleitet. Wenn der Monteur den Bolzen 36 ausreichend weit eingedrückt hat, kann die Schelle losgelassen werden, denn die Mutter 40 hält den Bolzen dann sofort fest.

Dadurch, daß nicht nur auf den Bolzen gedrückt wird, sondern zugleich die Betätigungslaschen 10a, 10b der Federmutter in entgegengesetzter Richtung belastet werden, wird vermieden, daß der Spannbolzen unerwünscht nach außen schwenkt und wieder außerhalb des Eingriffs mit dem Flansch 41 kommen wird.

Eventuell kann vorgesehen sein, daß die Betätigungslaschen 10a, 10b mit einem Positionierungsmittel für die Finger (Kuppen), zum Beispiel einer Vertiefung oder hochstehenden Rippen versehen sind, so daß der Finger an der gewünschten Stelle auf die Betätigungslasche gelegt wird, und der Finger einen Griff hat.

Der Bolzenkopf 38 kann mit einer zusätzlichen Kappe versehen sein, um eine größere Druckoberfläche für den Daumen zu schaffen.

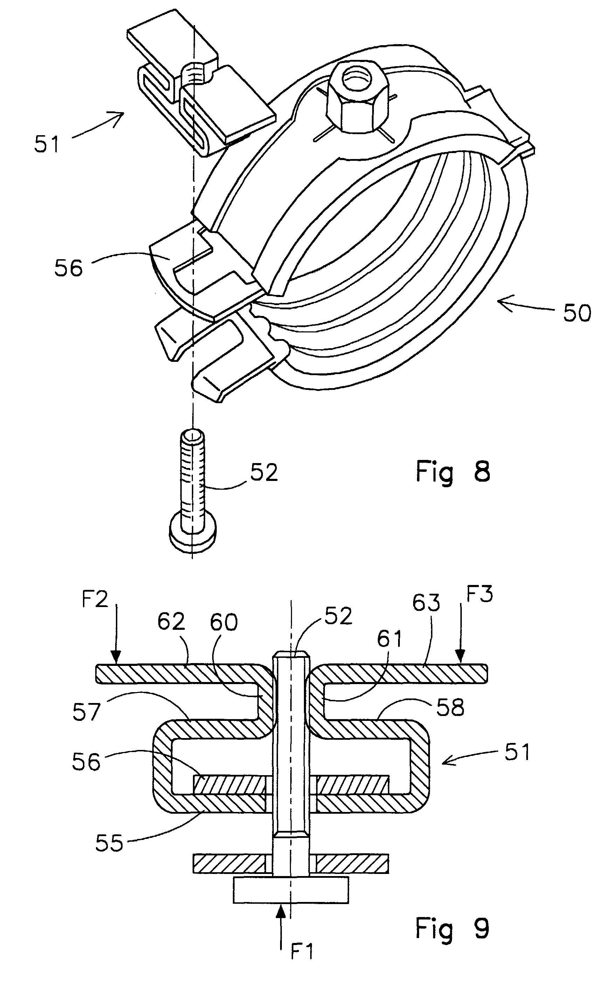

Die Figuren 8 und 9 zeigen eine Rohrschelle 50 mit einer Federmutter 51, sowie einem Spannbolzen 52. Die Federmutter 51 und der Spannbolzen 52 sind in Figur 8 auseinandergenommen dargestellt, aber die Schelle wird in montiertem Zustand geliefert, wobei der Spannbolzen 52 in der Federmutter 51 montiert ist. Dabei liegt die Federmutter 51 mit ihrem Grundteil 55 an einer Seite eines Flansches 56 des Schellenkörpers und mit ihren federnden Laschen 57, 58 an der anderen Seite dieses Flansches 56. Sowohl der Flansch 56 als das Grundteil 55 sind mit einer Bohrung versehen, durch die der Bolzen 52 ragt. Der Abstand zwischen den federnden Laschen 57, 58 und dem Grundteil 55 ist größer als die Dicke des Flansches 56, so daß die Federmutter 51 schwenken kann.

Die federnden Laschen 57, 58 der Federmutter 51 sind an ihren einander zugewandten Enden jeweils mit einem sich in die Bewegungsrichtung erstreckenden Muttersegment 60, 61 versehen. In einem Abstand zu der federnden Lasche 57, 58 erstreckt sich weiter ab diesem Muttersegment 60, 61 eine diametraal zu der Durchgangsbohrung für den Bolzen 52 gerichtete Betätigungslasche 62, 63 nach außen.

Die federnden Laschen 57, 58 sind hier wie im wesentlichen gerade Streifen ausgeführt.

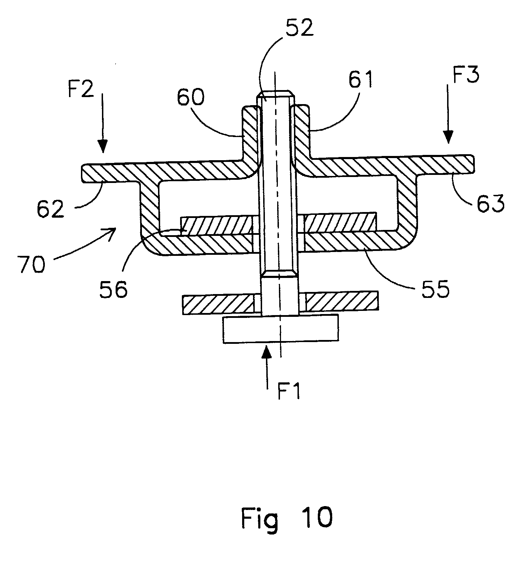

Aus Figur 10 ist ersichtlich, daß die Federmutter 70 im wesentlichen der Federmutter 51 entspricht mit dem Unterschied, daß die Betätigungslaschen 62, 63 sich nicht ab dem Muttersegment 60, 61 erstrecken, sondern ab der Stelle, wo die federnde Lasche 57, 58 mit dem hochstehenden Steg des Grundteils verbunden ist.

Die Pfeile F1, F2, F3 deuten wiederum die Richtung der Kräfte an, die von Hand auf die Federmutter und den Bolzen ausgeübt werden können, um den Bolzen leicht in die Mutter hineinzudrücken.

## Patentansprüche

1. Federmutter (4;4' ;40;51) zur Schnellbefestigung von Teilen mit Hilfe eines männlichen Befestigungselements, welche Federmutter ein Grundteil (5;5,44,46;55) umfaßt, sowie mehrere, von in einem Abstand zueinander liegenden Stellen des Grundteils ausgehenden federnden Laschen (8a,8b,9a,9b;57,58) mit einander zugewandten Enden, zwischen denen eine Durchgangsbohrung für ein mit einem Außengewinde oder einem anderen äußeren Profil versehenes männliches Befestigungselement (1;36;52) begrenzt ist, welche federnden Laschen an ihren zueinander gewandten Enden jeweils mit einem Profil (6a,6b;60,61) versehen sind, wobei das männliche Befestigungselement in einer Befestigungsrichtung durch die Durchgangsbohrung der Federmutter bei einer Spreizbewegung der federnden Laschen verschiebbar ist, und wobei eine Verschiebung in entgegengesetzter Richtung zu der Befestigungsrichtung durch eine Eingreifung der Profile der federnden Laschen und des männlichen Befestigungselements blockiert ist, **dadurch gekennzeichnet,** daß die Federmutter weiter bei zumindestens einer federnden Lasche (8a,8b,9a,9b;57,58) in solcher Weise mit einer mechanisch auf diese angreifende Betätigungslasche (10a,10;62,63) versehen ist, daß durch das Ausüben einer Kraft auf die Betätigungslasche, vorzugsweise von Hand, insbesondere mit einem Finger, die betreffende federnde Lasche ein Spreizbewegung ausführt.

2. Federmutter nach Anspruch 1, bei der die Federmutter (4;4';40;51) bei jeder federnden Lasche mit einer zugehörigen Betätigungslasche versehen ist.

3. Federmutter nach Anspruch 1 oder 2, bei der eine Betätigungslasche (10a,10b;62,63,Fig. 9) sich ab dem mit einem Profil versehenen Ende der federnden Lasche erstreckt.

4. Federmutter nach einem oder mehreren der vorhergehenden Ansprüche, bei der die Federmutter (4;4';40;51) zwei federnde Laschen hat.

5. Federmutter nach einem oder mehreren der vorhergehenden Ansprüche, bei der das Grundteil (5;55) mit einer Durchgangsbohrung (11) für das männliche Befestigungselement versehen ist.

6. Federmutter nach einem oder mehreren der vorhergehenden Ansprüche, bei der das Grundteil (5;55) einen Körper mit an seinen einander gegenüberliegenden Seiten einen hochstehenden Steg umfaßt, an welchen hochstehenden Steg eine federnde Lasche anschließt.

7. Federmutter nach einem oder mehreren der vorhergehenden Ansprüche, bei der jede federnde Lasche ein Verbindungsteil (8a,8b) und ein Gelenkteil (9a,9b) umfaßt, wobei des Verbindungsteil sich zwischen dem Gelenkteil und dem mit einem Profil versehenen Ende der federnden Lasche erstreckt, und wobei das Gelenkteil an das Grundteil anschließt.

8. Federmutter nach einem oder mehreren der vorhergehenden Ansprüche, bei der die federnden Laschen an ihren zueinander gewandten Enden jeweils mit einem sich in Befestigungsrichtung erstreckenden Steg (6a,6b;60,61) versehen sind, der an der der Durchgangsbohrung zugewandten Seite mit dem Profil versehen ist.

9. Federmuter nach einem oder mehreren der vorhergehenden Ansprüche, bei der die einander zugewandten Enden der federnden Laschen wie ein Muttersegment (6a,6b;60,61) mit einem Innengewinde ausgeführt sind.

10. Federmutter nach einem oder mehreren der vorhergehenden Ansprüche, bei der eine Betätigungslasche (10a,10b;62,63 Fig. 9) in einem Abstand über der zugehörigen Lasche verläuft.

11. Federmutter nach Anspruch 7, bei der die Verbindungsteile (8a,8b) in einem spitzen Winkel zu einer Fläche quer zu der Befestigungsrichtung verlaufen.

12. Schelle (20;30;50) zum Befestigen eines Rohres oder dergleichen an einer Wand, Decke oder einer anderen Unterstützung, welche Schelle mit einer Federmutter nach einem oder mehreren der vorhergehenden Ansprüchen versehen ist.

13. Schelle (20;30;50) zur Befestigung eines Rohres oder dergleichen an einer Wand, Decke oder einer anderen Unterstützung, welche Schelle einen Schellenkörper (20;30;50) zum Umschließen des Rohres umfaßt, welcher Schellenkörper eine von seinem ersten und zweiten freien Ende (34,35) begrenzte Öffnung hat, um den Schellenkörper um das Rohr anzuordnen und bei der der Schellenkörper gestattet, daß die freien Enden sich, um die Schelle zu schließen, in Richtung aufeinander zubewegen, wobei eine Verbindungseinheit (36,40;51,52) zum löslich miteinander Verbinden der freien Enden vorgesehen ist, welche Verbindungseinheit eine Federmutter (40;51) nach einem oder mehreren der vorhergehenden Ansprüche 1-11, sowie ein zugehöriges männliches Befestigungselement (36;52) umfaßt.

14. Schelle nach Anspruch 13, bei der die Federmutter (4';40;51) mehrere federnden Laschen mit jeweils einer zugehörigen Lasche umfaßt, welche Betätigungslaschen sich an beiden Seiten der Durchgangslochung für das männliche Befestigungselement in solcher Weise erstrecken, daß das männliche Befestigungselement in die Federmutter hineingedrückt werden kann, indem ein Daumen an das männliche Befestigungselement gelegt wird und zwei Finger, vorzugsweise der Zeigefinger und der Mittelfinger, jeweils in solcher Weise an eine Betätigungslasche (10a,10b;62,63) gelegt werden, daß mit dem Daumen einerseits und mit den Fingern andererseits entgegengesetzt gerichtete Kräfte ausgeübt werden können, und sich die federnden Laschen aufspreizen.

15. Schelle nach Anspruch 13 oder 14, bei der die Federmutter (4') fest an dem Schellenkörper (20) angeordnet ist.

16. Schelle nach Anspruch 14, bei der die Federmutter (4') einteilig mit dem Schellenkörper (20) ist.

17. Schelle nach Anspruch 13 oder 14, bei der die Federmutter (40;51) schwenkbar an dem Schellenkörper angeordnet ist.

18. Schelle nach Anspruch 17, bei der die Schelle (30) mit einer elastischen Einlage (32) an der Innenseite des Schellenkörpers versehen ist, und bei der die Federmutter (40) an der Einlage anliegen kann.

19. Schelle nach Anspruch 18, bei der die Federmutter (40,44,46) sich bis zwischen die elastische Einlage und den Schellenkörper erstreckt.

20. Schelle nach einem oder mehreren der Ansprüche 12-19, bei der das männliche Befestigungselement (36;52) in der Federmutter vormontiert ist und weiter in die Federmutter hineingedrückt werden kann.
